# EUROPEAN PATENT APPLICATION

(11) **EP 4 707 085 A1**
(43) Date of publication of application: **11.03.2026**
(21) Application number: 24199370.8
(22) Date of filing: 10.09.2024
(51) Int. Cl.: B60T 13/26, B60T 13/68, B60T 8/17

(54) **REDUNDANT BRAKE SYSTEM**

(71) Applicant: KB Intellectual Property GmbH & Co. KG, 82049 Pullach (DE)
(72) Inventor: GYURKO, Zoltán, 1047 Budapest (HU); NEMETH, Huba, 1116 Budapest (HU); ADLER, Tamas, 2030 Erd (HU); MOLNAR, Peter, 1046 Budapest (HU); FARKAS, Peter, 3525 Miskolc (HU); GÜCKER, Ulrich, 71701 Schwieberdingen (DE); THOMEN, Matthias, 70182 Stuttgart (DE)

(57) **Abstract**

A brake system (B) for a vehicle according to the present application comprises:
a first electronic control unit (3), inter alia adapted for controlling service brake functionalities;
a second electronic control unit (18), inter alia adapted for controlling park brake functionalities;
a first axle pressure modulator (9) pneumatically connected to at least one service brake chamber (12) associated with a first axle of the vehicle;
a second axle pressure modulator (10) pneumatically connected to at least one spring brake cylinder (13) associated with a second axle of the vehicle;
a park brake unit (15), also pneumatically connected to spring brake cylinders (13) associated with a second axle of the vehicle,
an air supply unit (14), wherein the air supply unit (14) is pneumatically connected to the first axle pressure modulator (9) and the second axle pressure modulator (10),
wherein the first control unit (3) is electronically connected to the first axle pressure modulator (9) and the second axle pressure modulator (10),
and the second control unit (18) is electronically connected to the first axle pressure modulator (9),
wherein the first electronic control unit (3) and the second electronic control unit (18) are integrated in the air supply unit (4).

The safety level for a brake system in particular for highly automated vehicles can be improved by this design.

## Description

The autonomous operation of commercial vehicles is a new field of innovation. More sophisticated functions require special hardware infrastructure. Up to now, commercial vehicle systems require the presence and attention of the driver. However, in the future the driver will be less involved into the driving control task of the vehicle, therefore automated systems are going to take over more significant driving functions, which requires increased reliability level and consequently different type of system redundancies.

Moreover, from a certain share of total production onwards, such vehicles will either be designed without a cab at all or only with an emergency cab for cost reasons. Accordingly, the driver interface - i.e., brake pedal - can either be simplified, e.g., without pneumatics, or even eliminated.

Commercial vehicles nowadays use electro-pneumatic or by-wire brake systems where the electronic part of the control is realized as a single circuit control. In case of malfunction of the control electronics the driver can control the pneumatic part of the brake system by his/her foot because a two-circuit pneumatic backup system is still available.

In case of highly automated vehicles where the driver is not in the control loop anymore or even not available or present in the vehicle, the above brake system would be not suitable, since there is no means which would substitute the brake control of the driver in case of malfunction of the single electronic control circuit.

A technical problem of the present application can be seen in increasing the safety level for a brake system in particular for highly automated vehicles.

Said technical problem is solved by a brake system according to claim 1 and a vehicle according to claim 15. Further advantageous embodiments of the present application are subject-matter of the dependent claims.

A brake system for a vehicle according to the present invention comprises:
a first electronic control unit, inter alia adapted for controlling service brake functionalities;
a second electronic control unit, inter alia adapted for controlling park brake functionalities;
a first axle pressure modulator pneumatically connected to at least one service brake chamber associated with a first axle of the vehicle;
a second axle pressure modulator pneumatically connected to at least one spring brake cylinder associated with a second axle of the vehicle;
a park brake unit, also pneumatically connected to spring brake cylinders associated with a second axle of the vehicle,
an air supply unit, wherein the air supply unit is pneumatically connected to the first axle pressure modulator and the second axle pressure modulator,
wherein the first control unit is electronically connected to the first axle pressure modulator and the second axle pressure modulator,
and the second electronic control unit is electronically connected to the first axle pressure modulator,
wherein the first electronic control unit and the second electronic control unit are integrated in the air supply unit.

Herein, the first electronic control unit, which is mainly the control unit for the service brake, and the second electronic control unit, which is mainly the control unit for the park brake, have redundant functions, that means that in the case of a malfunction of the second electronic control unit, the first electronic control unit can control service brake and park brake applications, and in the case of a malfunction of the first electronic control unit, the second electronic control unit can perform control functions for the service brake and park brake applications. The integration into the air supply unit provides a compact and a space-efficient solution. Hence, a common central electronic control unit is formed.

Preferably, also the park brake unit, mainly controlling the pressures for park brake applications, is integrated in the air supply unit. Then, all signals can be exchanged with the first electronic control unit and the second electronic control unit, as the park brake unit is directly connected with the first electronic control unit and the second electronic control unit.

The park brake unit is also controllable via an external signal source.

Preferably, the first electronic control unit is also adapted for controlling park brake functionalities, and the second electronic control unit is also adapted for controlling service brake functionalities. Hence, redundancy is enabled, and in the case of malfunction of one of the units, still effective braking can be guaranteed.

Preferably, a respective pressure control valve is provided between the first axle pressure modulator and the at least one service brake chamber, the control valve being connected to the first electronic control unit. This control valve has an ABS function, and is regularly be used at the front axle.

Preferably, the brake system further comprises a trailer control module, which is pneumatically connected to the air supply unit, and the electronically connected to the first electronic control unit. Hence, there is also redundancy with regard to the control unit for the control of the trailer, so that also the brakes of the trailer can be respectively be controlled.

Preferably, the brake system further comprises a first electronic power supply unit, which is connected to the first electronic control unit, and a second electronic power supply unit, which is connected to the second electronic control unit. Hence, there is also redundancy with regard to the power, and the first and second electronic control units are provided with energy from different sources, so that the case of a malfunction of the power, at least one electronic control unit, can work.

Preferably, the brake system also comprises a foot brake module, which is adapted for receiving brake commands for service brake actuation. The foot brake module is connected to the first electronic control unit and the second electronic control unit.

Preferably, the brake system also comprises a hand brake module, which is adapted for park brake actuation, and is also connected to the second electronic control unit.

In another embodiment, a park brake unit is a separate unit further serving as an additional control unit, which optionally is connected with a separate power source. The brake system in this case also comprises a handbrake module, which is the connected only to the park brake unit. In that architecture, park brake unit commands can be received by the park brake unit, but this is connected second electronic control unit.

Preferably, analogue and digital electronical electronical connections are provided between the first electronic control unit and the first axle pressure modulator, the first electronic control unit and the second axle modulator, and the second electronic control unit and first axle pressure modulator.

Herein, an extremely fast and reliable communication between these components is present.

Preferably, the brake system further comprises a third electronic control unit, which is adapted to provide highly automated driving brake demands, and which is connected to the first electronic control unit and the second electronic control unit. This unit can be used if vehicle components calculate brake commands.

Preferably, the first electronic control unit and the second electronic control unit are adapted to execute any type of vehicle control function, in particular any type of brake demands. This makes the brake control very versatile.

Preferably, the first electronic control unit and the second electronic control unit are also adapted to receive brake demands from any external source, for example the vehicle control system. Herein, for example a sensor could provide a signal, if an obstacle is determined and if an immediate braking is required.

Preferably, the brake system further comprises a first electronical switch, which switches the signal input of the first axle pressure modulator between the connection from the first electronic control unit and the second electronic control unit. In this case, it can be determined which of the control units is responsible for controlling the first axle. A vehicle according to the present invention comprises the park brake system as described above.

In the following, embodiments of the present invention are described by the appended figures.
- Fig. 1: shows an architecture of a brake system according to a first embodiment of the present invention.
- Fig. 2: shows an architecture of a brake system according to a second embodiment of the present invention.

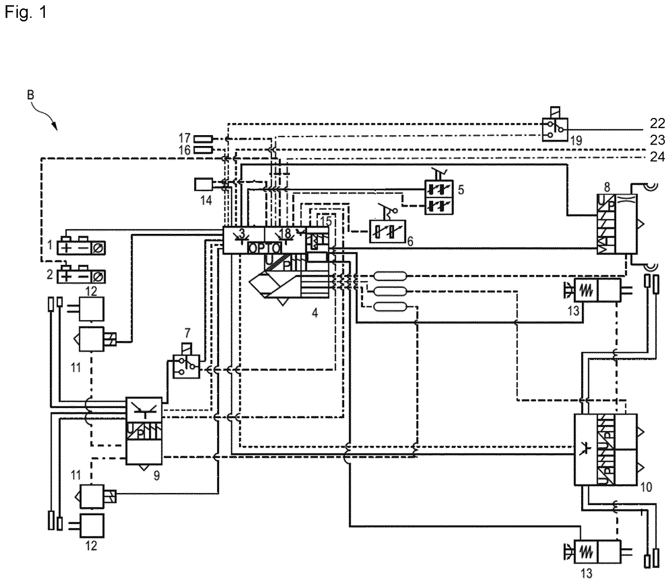

Fig. 1 shows a brake system B, comprising several components. In general, there is a first electronic control unit 3 and a second electronic control unit 18, these are integrated into an air supply unit 4, together with a park brake unit 15. From the air supply unit 4, there are pneumatic connections to the first axle pressure modulator 9 (for example for the front axle), a second axle pressure modulator 10 (example for the rear axle), and a trailer module 8. The front axle pressure modulator 9 is pneumatically connected with service brake chambers 12 (for example for the front axle), with pressure control valves 11 provided therebetween, which act as ABS valves. The second pressure modulator 10 is pneumatically connected to spring cylinders 13, which are typically provided at the rear axle. Also, there is a direct pneumatic line between the park brake unit 15, which is integrated in the air supply unit 4, to the trailer control module 8, and to the spring brake cylinders 13. The first electronic control unit 3 is electronically connected to a first electronic power supply unit 1, and the second electronic control unit 18 is electronically connected with a second electronic power unit 2. Furthermore, there are electronic connections between the first electronic control unit 3 and the second electronic control unit 18 with a foot brake module 5, which is adapted to actuate a service brake function. Furthermore, there is an electronic connection between the second electronic control unit 18 with and a hand brake module 6, which is adapted to actuate a park brake function.

Furthermore, there is an electronic connection between a third electronic control unit 14, which is suitable for performing highly autonomous driving applications, to the first electronic control unit 3 and the second electronic control unit 18. Furthermore, there is an analogous and a digital electronical connection between the first electronic control unit 3 and the front axle pressure modulator 9, as well as an analogous and digital connection between the first electronic control unit 3 and the second axle pressure modulator 10. Also, there is an electronic connection between the first electronic control unit 3 and the pressure control valves 11 (only analogous). Also, there is an analogous and digital connection from the second electronic control unit 18 to the front axle pressure modulator 9. While the digital connections into the front axle pressure modulator 9 from the first electronic control module 3 and the second electronic control unit 18 directly go into the front axle pressure modulator, there is a first electronic switch 7 between the analogous lines from the first electronic control unit 3 and the second electronic control unit 18. Herein, the input into the front axle pressure modulator 9 can be switched. There is further a first external signal source 16 and a second external signal source 17, both digitally connected to the first electronic control unit 3 and the second electronic control unit 18. This architecture allows for a redundant design, which can react to malfunctions.

When the brake system B is fully intact, the service brake function is controlled by the first electronic control unit 3, which acts as a master unit. Brake demands can come from the first external source 16 or from the foot brake module 5. In case of a malfunction of the first electronic control unit 3, or the first power supply 1, the brake control is taken over by the second electronic control unit 18, and the rear axle with the spring brake cylinders 13 is actuated by a proportional park brake control, while the first axle modulator 9 is electronically controlled and supplied by the second electronic control unit 18. If the second electronic control unit 18, which normally performs a park brake function, has a malfunction of its second power supply 2 has any malfunction, then the first electronic control unit 3 is also controlling the park system, which is then temporarily simulated by a service brake actuation (first axle pressure modulator 9 and service brake chambers 12).

Additionally, there is a first trailer communication line 22, a second trailer communication line 23 and a third trailer communication line 24, enabling communication with a trailer. Further, there is a second electronic switch 19, switching between the first electronic control unit 3 and the second electronic control unit 18 being connected to the first trailer communication line 22. The second trailer communication line 23 is connected to the first electronic control unit 3, and the third trailer communication line 24 is connected to the second electronic control unit 18.

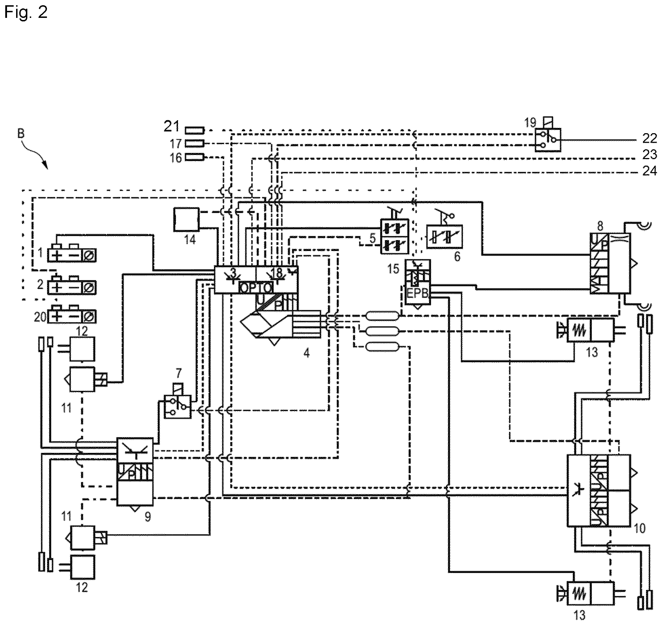

Fig. 2 shows a slightly different solution, wherein most of the functionalities are the same. There is the difference that the park brake unit 15 is not integrated into the air supply system 4, but is provided as a separate unit. With regard to the commands, it is not directly connected to the second electronic control unit 18, however only indirectly: the second electronic control unit can send brake commands to the second external signal source 17, the third electronic signal source 21 can again send brake commands to the park brake unit 15.. Park brake demands can be forwarded pneumatically from the park brake module 15 to the trailer control module 8. The park brake unit 15 is further pneumatically connected to the trailer module 8 and the spring chambers 13. It is also supplied by the air supply system 4. Brake commands come directly via the hand brake module 6, this is not further connected to the first electronic control unit 3 and the second electronic control unit 18. There is a third power source 20 for the park brake module 15, and also there is a third external source 18, with which the park brake module 15 can be directly controlled. There is also now a redundancy between the first electronic control unit 3 and the second electronic control unit 18, but the park brake module 15 is a third control module, which can also adopt any further control functions.

The above-mentioned invention is not limited to the embodiments as described above. There can be more axles to be controlled, and also the air supply unit 4 can have an additional power system.

### LIST OF REFERENCE SIGNS

- 1: first electronic power supply unit
- 2: second electronic power supply unit
- 3: first electronic control unit (electronic service brake)
- 4: air supply unit
- 5: foot brake module (service brake)
- 6: hand brake module (park brake)
- 7: first electronic switch
- 8: trailer control module
- 9: front axle pressure modulator
- 10: rear axle pressure modulator
- 11: pressure control valve (ABS valve)
- 12: service brake chambers
- 13: spring brake cylinders
- 14: third electronic control unit (HAD)
- 15: park brake unit
- 16: first external signal source (brake demand)
- 17: second external signal source
- 18: second electronic control unit (park brake)
- 19: second electronic switch
- 20: third electronic power supply unit (park brake)
- 21: third external signal source (park brake unit)
- 22: first trailer communication line
- 23: second trailer communication line
- 24: third trailer communication line

## Claims

1. Brake system (B) for a vehicle, wherein the brake system comprises:
a first electronic control unit (3), inter alia adapted for controlling service brake functionalities;
a second electronic control unit (18), inter alia adapted for controlling park brake functionalities;
a first axle pressure modulator (9) pneumatically connected to at least one service brake chamber (12) associated with a first axle of the vehicle;
a second axle pressure modulator (10) pneumatically connected to at least one spring brake cylinder (13) associated with a second axle of the vehicle;
a park brake unit (15), also pneumatically connected to spring brake cylinders (13) associated with a second axle of the vehicle,
an air supply unit (14), wherein the air supply unit (14) is pneumatically connected to the first axle pressure modulator (9) and the second axle pressure modulator (10),
wherein the first control unit (3) is electronically connected to the first axle pressure modulator (9) and the second axle pressure modulator (10),
and the second control unit (18) is electronically connected to the first axle pressure modulator (9),
wherein the first electronic control unit (3) and the second electronic control unit (18) are integrated in the air supply unit (4).

2. Brake system (B) according to claim 1, wherein the park brake unit (15) is also integrated in the air supply unit (4), and/or the park brake unit (15) is controllable via an external signal source (21).

3. Brake system (B) according to one of the previous claims, wherein the first electronic control unit (3) is also adapted for controlling park brake functionalities, and the second electronic control unit (18) is also adapted for controlling service brake functionalities.

4. Brake system (B) according to one of the previous claims, wherein a pressure control valve (11) is provided between the first axle pressure modulator (9) and the at least one service brake chamber (12), the pressure control valve (11) electronically connected with the first electronic control unit (3).

5. Brake system (B) according to one of the previous claims, further comprising a trailer control module (8), which is pneumatically connected to the air supply unit (4), and electronically connected to the first electronic control unit (3).

6. Brake system (B) according to one of the previous claims, further comprising a first electronic power supply unit (1), connected to the first electronic control unit (3), and a second electronic power supply unit (2), connected to the second electronic control unit (18).

7. Brake system (B) according to one of the previous claims, further comprising a foot brake module (5) adapted for service brake actuation, which is connected to the first electronic control unit (3) and the second electronic control unit (18).

8. Brake system (B) according to one of the previous claims, further comprising a hand brake module (6) adapted for park brake actuation, which is connected to the second electronic control unit (18).

9. Brake system (B) according to one of claims 1 or 3 to 7, wherein the park brake unit (15) is a separate unit further serving as further control unit, which optionally is connected to a third power source (20), the brake system (B) further comprising a hand brake module (6) for park brake actuation, which is connected to the park brake unit (15).

10. Brake system (B) according to one of the previous claims, wherein analogue and digital electronical connections are provided between the first control unit (3) and the first axle pressure modulator (9), the first control unit (3) and the second axle pressure modulator (10) and the second control unit (18) and the first axle pressure modulator (9).

11. Brake system (B) according to one of the previous claims, further comprising a third electronic control unit (14), adapted to provide highly automated driving brake demands, and which is connected to the first electronic control unit (3) and the second electronic control unit (18).

12. Brake system (B) according to one of the previous claims, wherein the first electronic control unit (3) and the second electronic control unit (18) are adapted to execute any type of vehicle control functionalities.

13. Brake system (B) according to one of the previous claims, wherein the first electronic control unit (3) and the second electronic control unit (18) are adapted to receive brake demands from any external source (16, 17, 20).

14. Brake system (B) according to one of the previous claims, further comprising a first electronic switch (7), switching the signal input of the first axle pressure modulator (9) between the connection from the first electronic control unit (3) and the second electronic control unit (18).

15. Vehicle, comprising the brake system (B) according to one of claims 1 to 14.
